Europäisches Patentamt

European Patent Office

Office européen des brevets

(19)

(11) Publication number: **0 246 089**
**A2**

(12) **EUROPEAN PATENT APPLICATION**

(21) Application number: **87304258.4**

(22) Date of filing: **13.05.87**

(51) Int. Cl.⁴: **B 41 M 5/12**

(30) Priority: **14.05.86 JP 110330/86**

(43) Date of publication of application:
**19.11.87 Bulletin 87/47**

(84) Designated Contracting States: **DE FR GB**

(71) Applicant: **KUREHA KAGAKU KOGYO KABUSHIKI KAISHA**
**9-11 Horidome-cho 1-chome Nihonbashi Chuo-ku Tokyo (JP)**

(72) Inventor: **Igarashi, Yuriko**
**174 Kaminakada Nishiki-machi**
**Iwaki-shi Fukushima-ken (JP)**

**Okada, Yoshio**
**311 Rune-Tokiwadaira 439-41 Kanegasaku**
**Matsudo-shi Chiba-ken (JP)**

**Igari, Yutaka**
**6-7-1 Nakaoka-machi**
**Iwaki-shi Fukushima-ken (JP)**

(74) Representative: **Woods, Geoffrey Corlett et al**
**J.A. KEMP & CO. 14 South Square Gray's Inn**
**London WC1R 5EU (GB)**

(54) Ink containing microcapsules for pressure-sensitive copying paper.

㉟ A microcapsulate ink for use in preparing a pressure-sensitive copying paper comprises Microcapsules A which contain a solution of dyestuff for no-carbon pressure-sensitive copying paper and Microcapsules B which contain a solvent but no said dyestuff and which have been formed in coagulated states, both types of microcapsules being dispersed in a dispersion medium and the mean particle diameter of the said Microcapsules B being from l.l to 3.5 times larger than that of the said Microcapsules A.

EP 0 246 089 A2

## Description

<u>INK CONTAINING MICROCAPSULES FOR PRESSURE-SENSITIVE COPYING PAPER</u>

The present invention relates to an ink containing microcapsule (hereinafter referred to as microcapsulate ink) for a pressure-sensitive copying paper.

As a type of pressure-sensitive copying paper, the so-called no-carbon pressure-sensitive copying paper has come into wide use. The so-called no-carbon pressure-sensitive copying paper is prepared by piling an upper sheet of paper (so-called CB paper), on the back of which have been applied microcapsules containing, as a core substance, a solution of a leuco-type dyestuff, on a lower sheet of paper (so-called CF paper or colour-developing paper), on the upper surface of which a color-developer comprising an acidic substance has been applied. When a writing pressure or a typewriting pressure is applied on this no-carbon pressure-sensitive copying paper, the color is developed on the paper.

Concerning such a no-carbon pressure-sensitive copying paper, it has been known that the stability of microcapsules in an ink itself and the stability of microcapsules applied on a sheet of CB paper have great influence on its commercial value, particularly on the undesirable generation of stains on a surface of the sheet at a time other than the recording time, or on the color-development when a sheet is cut, etc.

So far, to raise the stability of microcapsules, a method of raising the mechanical strength of microcapsules by reducing their diameters or a method of increasing the anti-friction strength of microcapsules by increasing the amount of a binding agent to a sheet of paper to which the microcapsules are applied has been used.

However, when the above method is used, release of a solution of dyestuffs from microcapsules is hindered at the time of writing and accordingly, there is a defect of not obtaining a sufficient color-development corresponding to an amount of the dyestuff contained in the microcapsules.

To avoid the defect, at present, a method of using oxidized starch, wood meal, plastic particles, etc. as a spacer and using the spacer together with the microcapsules has been most frequently used. However, when such a spacer is used and when an affinity between microcapsules and a dispersing medium containing the spacer is poor, the microcapsulate-ink-coated surface of a sheet of paper becomes remarkably rough. Especially, when a microcapsulate ink is partially applied to prepare a partly pressure-sensitive copying paper with a printing machine such as flexso, gravure or letterpress, a lot of trouble occurs, that is, there are many occasions where the ink does not move smoothly onto a printing roll and accordingly the spacer does not attain its object.

The present invention has been done in view of the above situation of microcapsulate inks for a pressure-sensitive copying paper. The present inventors have studied to obtain a microcapsulate ink, of which microcapsules containing dyestuff are stable enough not to be broken and not to give any stain to sheets of paper coated with the ink during storage. Further, they have studied to make the microcapsulate ink to be able to be transferred to a printing roll of a printing machine such as flexso, gravure or letterpress smoothly and to give uniformly coated sheet of paper with the ink even when it is used to prepare a partially coated pressure-sensitive copying paper.

As a result of their intensive studies, they have succeeded to obtain the desirable ink by dispersing microcapsules containing a solvent only (not containing any dyestuff), which have, in a coagulated state, a larger mean diameter than that of the microcapsules containing a solution of dyestuff, with microcapsules containing a solution of dyestuff in a medium. Based on this information, the present inventors have attained the present invention.

The heart of the present invention lies, in the production of a microcapsulate ink for pressure-sensitive copying papers, in dispersing both Microcapsules A which contain a solution of dyestuff and Microcapsules B which contain a solvent not containing any dyestuff in a dispersion medium, forming Microcapsules B in a coagulated state and making the mean particle diameter of Microcapsules B from l.l to 3.5 times larger than the mean particle diameter of Microcapsules A.

Further, the heart of the present invention lies in using l to 90 parts by weight of Microcapsules B to l00 parts by weight of Microcapsules A.

Still more, the heart of the present invention lies in offering a microcapsulate ink for use in producing the pressure-sensitive copying paper excellent in friction-resistance and color-development.

The present invention relates to the microcapsulate ink. Since the mean diameter of Microcapsules B is a little larger than that of Microcapsules A, on a surface of a sheet of paper on which the ink including Microcapsules A and Microcapsules B have been applied, even when a friction happens to the sheet of paper during storage, Microcapsules B are at first broken, and thereby relax the friction energy. Thus, Microcapsules B prevent the break of Microcapsules A. In this connection, since Microcapsules B do not contain any dyestuff, the break of Microcapsules B does not develop any color on the surface of the sheet of paper and, in addition, the solvent in Microcapsules B exhibits a buffer action against the pressure due to friction during storage of the pressure-sensitive copying paper and also promotes a shift of the dyestuff released by a break of Microcapsules A at the time of writing to the color-developer, resulting in an increase of the speed of color-developing.

Furthermore, in the present invention, since Microcapsules B have been formed in a coagulated state, they have a stronger resistance to pressure than the resistance of the microcapsules in a single form with the same diameter and accordingly, Microcapsules B can effectively maintain Microcapsules A, containing a dyestuff, in a more stable state.

Although Microcapsules B of the present invention which contain a solvent have the above effects, it is necessary that Microcapsules B have the following properties additionally.

Namely, when Microcapsules B are separated and dried after the preparation thereof, it is required that they are free-flowing powdery capsules which are excellent in heat-resistance and solvent-resistance. "Solvent" herein mentioned means the solvent such as an organic solvent, wax and water which are used in preparing an ink of the present invention.

For instance, as a resisting property of Microcapsules B against organic solvents, it is necessary that the rate of extraction of the core material when the capsules are immersed in acetone for 24 hours at 20°C is not more than 5.0%, preferably not more than 2.0%. Concerning the heat-resisting property, it is necessary that the rate of weight reduction after keeping the capsules in a hot wind of l00°C for 24 hours is not more than 5.0%, preferably not more than 3.0%.

In the present invention, as far as the microcapsules have the above properties, although any method of produce any microcapsules can be used, it is particularly preferable to use an aminoplast resin as a material for wall membrane of the microcapsules. Such microcapsules can be prepared by the method disclosed in Japanese Patent Applications Laid-Open (KOKAI) Nos. 57-56293/1982 and 58-52785/1983. As a material for the wall membrane, a resin obtained by polycondensing a water-soluble cationic urea resin and a mixture of at least two prepolymers selected from the group consisting of melamine-formaldehyde prepolymer, urea-formaldehyde prepolymer, melamine-urea-formaldehyde prepolymer, thiourea-melamine-formaldehyde prepolymer and thiourea-melamine-urea-formaldehyde prepolymer, or a mixture of thiourea-formaldehyde prepolymer and melamine-formaldehyde prepolymer in the presence of an anionic surfactant while using an acid catalyst is preferable.

In the present invention, Microcapsules B which are formed with the aminoplast resin in the coagulated state and are containing solvent only are used. In order to prepare Microcapsules B in a coagulated state, the velocity of the polycondensation reaction of prepolymers is raised, the resin of a high molecular weight is prepared rapidly or the amount of the coacervate is raised, and Microcapsules B in the coagulated state of a desired size can be formed by changing the kind and the amount of an acid catalyst and the amount and the concentration of prepolymers, etc.

A solvent used as the core material of Microcapsules B, containing a solvent only, can be any liquid selected from a wide range of liquid substances provided that such a solvent does not hinder the color-development of the leuco-type dyestuff in Microcapsules A and particularly, a solvent which has a high boiling temperature, is low in bad odor and is available at a moderate price is preferable. For instance, alkylnaphthalene, phenylxylylethane, alkylbiphenyl, hydrogenated terphenyl, chlorinated paraffin, mineral oil, vegetable oil, phthalic ester and a mixture thereof is preferable.

Furthermore, it is preferable to use Microcapsules B which have been formed at the rate of from l0 to 400 parts by weight of the material of wall membrane to l00 parts by weight of the core material.

In the present invention, Microcapsules B, which have the mean particle diameter l.l to 3.5 times, preferably l.5 to 3.0 times larger than that of Microcapsules A containing dyestuff are used, and taking into consideration of the mean particle diameter of conventional microcapsules containing a dyestuff for a pressure-sensitive copying paper, the mean particle diameter of Microcapsules B containing a solvent is calculated to be 3 to 50 μm.

The microcapsulate ink according to the present invention is the product produced by dispersing a mixture of l to 90 parts by weight of Microcapsules B containing a solvent only and l00 parts by weight of Microcapsules A containing a dyestuff in a dispersion medium. As a dispersion medium, a vehicle of organic solvent series, a hotmelt-type vehicle, a vehicle of water series, etc. can be used depending on its application.

As has been described above, the microcapsulate ink according to the present invention contains Microcapsules B which contain a solvent not containing any dyestuff, have been formed in the coagulated state and are highly resistant to pressure and the mean particle diameter of Microcapsules B has been made to be larger than that of Microcapsules A containing a dyestuff. Accordingly, when a pressure-sensitive copying paper is prepared using the ink, even if the paper is subjected to friction during storage, Microcapsules B containing a solvent are broken firstly and relax the friction energy. Consequently, the probability of a break of Microcapsules A containing a solution of a dyestuff is small and a surface of the copying paper is not stained. Furthermore, even when the ink is applied partially on a sheet of paper with a printing machine such as flexso, gravure, letterpress, the coated surface does not present a roughness as in the case of using a conventional spacer and the ink smoothly shifts onto a printing roll to give a uniformly printed surface of the paper.

Furthermore, the solvent contained in Microcapsules B of the microcapsulate ink according to the present invention carry out the buffer action to the pressure due to friction as has been described above, and when the solvent is released from Microcapsules B at the time of writing of the pressure-sensitive copying paper, the solvent promotes to shift the dyestuff to the color-developer easily and accordingly, the solvent has an effect of raising the speed of color-development.

The present invention will be concretely explained while referring to the non-limitative Examples as follows:

EXAMPLE 1:

1-1 Preparation of Microcapsules B which contain a solvent not containing any dyestuff and are in a coagulated state:

(Preparation of prepolymers)

A mixture of 63 g of melamine and 162 g of formalin (an aqueous 37% solution of formaldehyde, the same in the following) which had been adjusted to pH of 9.0 with an aqueous 2% solution of sodium hydroxide was brought into reaction at 70°C, and immediately after the dissolution of melamine, 225 g of water were added into the solution and the mixture was stirred for 3 minutes to obtain an aqueous solution of a melamine-formaldehyde prepolymer. (Hereinafter, the formed melamine-formaldehyde prepolymer is referred to as M4F prepolymer and M4F means 4 mols of formaldehyde to 1 mol of melamine).

Separately, 60 g of urea and 146 g of formalin which had been adjusted to pH to 8.5 with triethanolamine were mixed, and the mixture was brought into reaction for one hour at 70°C to obtain an aqueous solution of a urea-formaldehyde prepolymer (hereinafter referred to as U1.8F prepolymer).

(Preparation of a water-soluble cationic urea resin)

60 g of urea and 162 g of formalin were mixed under agitation and pH of the mixture was adjusted to 8.8 with triethanolamine. After bringing the pH adjusted mixture into reaction for 30 minutes at 70°C, 24 g of water and 6 g of tetraethylenepentamine were added to 40 g of the reaction mixture and the mixture was adjusted to pH of 3 with 15% hydrochloric acid under agitation at 70°C and was brought into reaction for one hour. As pH of the reaction mixture reduced, it was re-adjusted to 3 with an aqueous 10% solution of sodium hydroxide. Thereafter, the reaction was continued and when the viscosity of the reaction mixture reached to 200 cps, the reaction mixture was neutralized with an aqueous 10% solution of sodium hydroxide and 400 g of water were added to the neutralized mixture to obtain an aqueous solution of a water-soluble cationic urea resin.

(Microcapsulation)

After adjusting pH of a mixture of 100 g of M4F prepolymer, 50 g of U1.8F prepolymer, 158 g of the water-soluble cationic urea resin, 62 g of water and 1 g of triethanolamine to 5.2 with an aqueous 10% solution of citric acid, 3 g of an aqueous 10% solution of sodium alkylbenzene sulfonate (made by KAO-ATLAS CO., under the registered trade name of NEOPEREX) were added to the adjusted mixture. The obtained liquid was called as Liquid A.

After emulsifying 150 ml of diisopropylnaphthalene (made by KUREHA KAGAKU KOGYO Co., Ltd., under the trade name of KMC-113) into the Liquid A so that the mean diameter of the droplet of diisopropylnaphthalene becomes 3.0 μm while using a homogenizer, the formed emulsion was kept at 30°C under a gentle stirring and then, an aqueous 2% solution of sulfuric acid was added to the emulsion to adjust the pH thereof to 3.9. After one hour, by adding further 200 g of water, the formed microcapsules slowly cohered together into a coagulated state. After four hours, an aqueous 2% solution of sulfuric acid was further added to the slurry of microcapsules in a coagulated state to make the pH of the system to 3.0 and the reaction was continued for 16 hours under stirring to complete the microcapsulation.

The obtained slurry of the microcapsules was supplied to a membrane filter to separate the microcapsules from the liquid, and after washing the separated microcapsules with water, the washed microcapsules were dried by a spray dryer to obtain 200 g of powdery microcapsules of a mean particle diameter of 10 μm measured by a Coulter counter.

1-2 Preparation of Microcapsules A which contain a solution of a dyestuff:

A solution of a dyestuff, CVL, in diisopropylnaphthalene was prepared so that the concentration of CVL became 3% by weight, and after emulsifying the prepared solution in Liquid A prepared in the item 1-1 so that the mean diameter of the droplets of the solution became 5 μm, the emulsion was kept at 30°C under gentle stirring and an aqueous 10% solution of citric acid was added to the emulsion to adjust pH of the emulsion to 3.8 to microcapsulate the system. After separating the microcapsules from the slurry and washing the separated microcapsules with water, the washed microcapsules were dried by a spray dryer to obtain 205 g of the free-flowing microcapsules of a mean particle diameter of 5 μm in a single form (not coagulated).

1-3 Preparation of the microcapsulate ink:

Into a liquid mixture of 38 g of n-heptane, 2 g of caster oil and 2 g of soy bean oil, 12 g of Microcapsules B which were prepared in item 1-1 and 38 g of Microcapsules A which were prepared in item 1-2 were mixed.

Separately, a liquid mixture of waxes was prepared by melting 10 g of oxazoline wax (made by I.M.C. Chemical Group, under the symbol of TS-254 AA), 8 g of Höchst wax-LP (made by Höchst Co., an acid wax) and 30 g of Höchst wax PE-520 (made by Höchst Co., a polyolefin wax) together.

While keeping the liquid mixture of waxes at 95°C, the mixture of Microcapsules A and Microcapsules B was added to the liquid mixture of waxes and the whole material was gently stirred to produce an ink of hotmelt-type.

On partially applying the ink of hotmelt-type on a surface of a paper sheet while using a heated metal blade, a partially coated sheet of CB paper showing a white and smoothly coated surface was obtained.

EXAMPLE 2:
Into a molten mixture obtained by heating 150 g of carnauba wax (melting point of 85°C), 100 g of paraffin wax (melting point of 68°C) and 50 g of microcrystalline wax (melting point of 82°C) together with 200 g of diisopropylnaphthalene at 95°C, 50 g of Microcapsules B containing a solvent and 300 g of Microcapsules A containing a solution of the dyestuff both of which had been obtained in Example 1 were dispersed to produce an ink of hotmelt-type. A partially coated sheet of CB paper was prepared by partially applying the ink of hotmelt-type on the sheet of paper with a letterpress printing machine of hotmelt-type.

EXAMPLE 3:
Into a mixed solvent consisting of 40 parts by weight of ethanol, 40 parts by weight of ethyl acetate, 10 parts by weight of isopropyl alcohol and 10 parts by weight of butyl acetate, 60 parts by weight of ethylcellulose were dissolved and 60 parts by weight of Microcapsules B and 150 parts by weight of Microcapsules A, both of which had been obtained in Example 1, were mixed to obtain a printing ink for gravure-type.
On partially applying the printing ink on a surface of a sheet of paper with a gravure printing machine, a partially printed sheet of CB paper having a smoothly printed surface was obtained.

EXAMPLE 4:
Except for using 100 g of a thiourea-melamine-urea-formaldehyde prepolymer instead of a urea-formaldehyde prepolymer used in Example 1, emulsifying diisopropylnaphthalene into droplets of a mean diameter of 4.5 μm, coagulating them and preparing Microcapsules B of a mean particle diameter of 15 μm from the coagulates, a microcapsulate ink of hotmelt-type was prepared in the same manner as in Example 1.

EXAMPLE 5 :
Except for using 75 g of melamine-urea-formaldehyde prepolymer, emulsifying diisopropylnaphthalene into droplets of a mean diameter of 2.0 μm, coagulating them, preparing Microcapsules B of a mean particle diameter of 8 μm and using 17 g of the Microcapsules B, a microcapsulate ink of hotmelt-type was prepared in the same manner as in Example 1.

EXAMPLE 6:
Except for using 195 g of melamine-urea-formaldehyde prepolymer, emulsifying diisopropylnaphthalene into droplets of a mean diameter of 2.0 μm, coagulating them, preparing Microcapsules B of a mean particle diameter of 8 μm and using 12 g of the prepared Microcapsules B, a microcapsulate ink of hotmelt-type was prepared in the same manner as in Example 1.
In the followings, the modes of preparing a microcapsulate ink without using Microcapsules B containing a solvent only are shown as Comparative Examples.

COMPARATIVE EXAMPLE 1:
In the same manner as in Example 1 except for not using Microcapsules B, an ink of hotmelt-type was prepared.

COMPARATIVE EXAMPLE 2:
In the same manner as in Example 2 except for not using Microcapsules B, an ink of hotmelt-type was prepared.

COMPARATIVE EXAMPLE 3:
In the same manner as in Example 3 except for not using Microcapsules B, a printing ink of gravure-type was prepared.

COMPARATIVE EXAMPLE 4:
In the same manner as in Example 2 except for using oxidized starch of a mean particle diameter of 13.5 μm as a spacer instead of using Microcapsules B, an ink of hotmelt-type was prepared.

EXAMPLE 7:
By mixing 50 g of Microcapsules B which contain the solvent and 300 g of Microcapsules A which contain the dyestuff, both of which were obtained in Example 1, with 1200 g of an aqueous 10% solution of polyvinyl alcohol, an ink of water series was prepared. By applying the prepared ink on a surface of a sheet of paper using a Mayerbar, a totally coated sheet of CB paper was prepared.

COMPARATIVE EXAMPLE 5:
In the same manner as in Example 7 except for not using Microcapsules B, a totally coated sheet of CB paper was prepared.

TESTS OF THE DEVELOPED COLOR AND THE STAINS ON CF PAPER:
Seven kinds of sheets of CB paper were prepared by using each of the six hotmelt-type and one gravure-type microcapsulate inks prepared in Examples 4 to 6 and Comparative Examples 1 to 4 according to

the methods described in the following examples: Examples 4 to 6 as in Example 1; Comparative Example 1 as in Example 1; Comparative Examples 2 and 4 as in Example 2 and Comparative Example 3 as in Example 3.

Onto each of the five sheets of CB paper prepared in Examples 1 to 3 and 7 and Comparative Example 5 and the seven sheets of CB paper prepared as above, a sheet of CF paper, on which a salt of salicylic acid has been applied, is piled to prepare the twelve sets of various pressure-sensitive copying paper. The color was developed on each set of the obtained pressure-sensitive copying paper by using a typewriter of Olivetti.

The densities of the developed color on each of the twelve sheets of CF paper were measured at one minute and at 24 hours after typewriting as the color density (Macbeth value). The results are shown in Table 1.

The measurement of the stains on the each sheet of CF paper was carried out by using a color fastness tester (Made by TOYO SEIKI Works) as follows.

After fixing a set of a pressure-sensitive copying paper to the tester, friction was given by one reciprocal motion on the set while applying a weight of 500 g on the set and the color density on the sheet of CF paper of the time was measured as the Max value. The results of the tests are also shown in Table 1.

Table 1

| No. of Example | Ratio of particle diameter and Ratio of composition of B/A *1) | | Type of ink | Properties of the pressure-sensitive copying paper | | |
|---|---|---|---|---|---|---|
| | Ratio of particle diameter *2) | Ratio of com-position *3) | | Density of the colour | | Degree of stains |
| | | | | after 1 min. | after 24 hours | |
| Example 1 | 2.0 | 31.6 | Hotmelt *4) | 0.60 | 0.67 | 0.08 |
| Example 2 | 2.0 | 16.6 | Hotmelt | 0.59 | 0.67 | 0.10 |
| Example 3 | 2.0 | 40.0 | Gravure | 0.65 | 0.85 | 0.11 |
| Example 4 | 3.0 | 31.6 | Hotmelt | 0.58 | 0.68 | 0.10 |
| Example 5 | 1.6 | 45 | Hotmelt | 0.59 | 0.65 | 0.08 |
| Example 6 | 1.6 | 31.6 | Hotmelt | 0.53 | 0.67 | 0.11 |
| Example 7 | 2.0 | 16.6 | Water series | 0.65 | 0.85 | 0.12 |
| Com. Ex.1 *5) | - | - | Hotmelt | 0.42 | 0.68 | 0.16 |
| Com. Ex.2 | - | - | Hotmelt | 0.41 | 0.68 | 0.18 |
| Com. Ex.3 | - | - | Gravure | 0.65 | 0.85 | 0.25 |
| Com. Ex.4 | - | - | Hotmelt | 0.41 | 0.68 | 0.13 |
| Com. Ex.5 | - | - | Water series | 0.65 | 0.85 | 0.27 |

Notes: refer to the next page

0 246 089

Notes for Table 1:

*1)   A in Table means Microcapsules A which contain the solution of the dyestuff and B means Microcapsules B which contain the solvent not containing any dyestuff and are in coagulated states.

*2)   Ratio of particle diameter is the ratio of the mean particle diameter of Microcapsules B (in a coagulated state) to the diameter of Microcapsules A.

*3)   Ratio of composition is the rate of the part by weight of Microcapsules B to 100 parts by weight of Microcapsules A.

*4)   The ink contains an organic solvent.

*5)   Com. Ex. means Comparative Example.

Above notes (1) to (3) and (5) shall be applied also to Tables 2 and 3.

COMPARATIVE EXAMPLE 6:
   Into a molten mixture of 150 g of carnauba wax, 100 g of paraffin wax and 50 g of microcrystalline wax, 100 g of Microcapsules B containing a solvent not containing any dyestuff and 100 g of Microcapsules A containing a solution of of a dyestuff, both of which had been obtained in Example 1, were added under stirring and obtained a hotmelt-type ink. The obtained ink was partially applied onto a sheet of paper in the same manner as in Example 2 with a hotmelt-type letterpress printing machine and prepared a sheet of CB paper.

COMPARATIVE EXAMPLE 7:
   Into a molten mixture of 275 g of rice wax (melting point of 80°C) and 25 g of diisopropylnaphthalene, 100 g of Microcapsules B and 100 g of Microcapsules A, both of which had been obtained in Example 1, were added under stirring to obtain a hotmelt-type ink. The obtained ink was partially applied onto a sheet of paper in the same manner as in Example 1 to prepare a partially coated sheet of CB paper.

COMPARATIVE EXAMPLE 8:
   A hotmelt-type ink was prepared by mixing 50 g of Microcapsules B having a mean particle diameter of 5 $\mu$m and 300 g of Microcapsules A obtained in Example 1 with the molten medium used in Example 4, and the obtained ink was applied onto a sheet of paper in the same manner as in Example 1.
   Using each sheets of the CB paper prepared in Comparative Examples 6 to 8, three sets of various type of pressure-sensitive copying paper were obtained, two of which are using same amount of Microcapsules A and B, and remaining one is using Microcapsules A and B having a same mean particle diameter. The properties of the three sets were measured according to the tests described before and the results are shown in Table 2.

COMPARATIVE EXAMPLE 9:
   In the item of (Microcapsulation) described in 1-1 of Example 1, an emulsified substance prepared by adding diisopropylnaphthalene into Liquid A was microcapsulated by using an aqueous 10% solution of citric acid

instead of an aqueous 2% solution of sulfuric acid and obtained Microcapsules B of a mean particle diameter of 5 μm in single forms.

Then, a hotmelt-type ink was prepared in the same manner as in Example 2 using 50 g of the Microcapsules B in single forms instead of the Microcapsules B in coagulated states in Example 2.

As the summary, the mean particle diameter of Microcapsules A and B in the ink is 5 μm and Microcapsules B are in single forms.

A sheet of CB paper was prepared using the ink in the same manner as in Example 2 and a set of pressure-sensitive copying paper was prepared with the sheet of CB paper. The color density of developed color and the stains on this set were compared to those of the set obtained in Example 2. The results are shown in Table 3.

As a whole, all the rate of application of Microcapsules A on the sheets of CB paper in Examples I to 7 and Comparative Examples I to 9 was 2.0 g/m².

Table 2

| No. of Com. Ex. | Particle diameter of B (μm) | Ratio of particle diameter and ratio of composition of B/A | | Type of ink | Properties of the pressure-sensitive copying paper | | |
|---|---|---|---|---|---|---|---|
| | | Ratio of particle diameter | Ratio of composition | | Density of colour | | Degree of stains |
| | | | | | after 1 min. | after 24 hours | |
| 6 | 10 | 2.0 | 100 | Hotmelt | 0.20 | 0.45 | 0.08 |
| 7 | 10 | 2.0 | 100 | Hotmelt | 0.21 | 0.46 | 0.09 |
| 8 | 5 | 1.0 | 16.6 | Hotmelt | - | 0.67 | 0.17 |

## Table 3

| No. of Example | Ratio of particle diameter and ratio of composition of B/A | | Type of ink | Properties of the pressure-sensitive copying paper | | |
|---|---|---|---|---|---|---|
| | Ratio of particle diameter | Ratio of composition | | Density of colour | | Degree of stains |
| | | | | after 1 min. | after 24 hours | |
| Com. Ex. 9 | 1.0 | 16.6 | Hotmelt | 0.57 | 0.67 | 0.17 |
| Example 2 | 2.0 | 16.6 | Hotmelt | 0.59 | 0.67 | 0.10 |

0 246 089

## Claims

1. A microcapsulate ink comprising Microcapsules A which contain a solution of dyestuff for no-carbon pressure-sensitive copying paper and Microcapsules B which contain a solvent but no said dyestuff and which have been formed in coagulated states, both types of microcapsules being dispersed in a dispersion medium and the mean particle diameter of the said Microcapsules B being from 1.1 to 3.5 times larger than that of the said Microcapsules A.

2. An ink according to claim 1, wherein the amount of the said Microcapsules B used is from 1 to 90 parts by weight per 100 parts by weight of the amount of the said Microcapsules A used.

3. An ink according to claim 1 or 2, wherein the mean particle diameter of the said Microcapusles B is from 1.5 to 3.0 times larger than that of the said Microcapsules A.

4. An ink according to any one of the preceding claims, wherein the rate of extraction of core material from the said Microcapsules B by acetone is not more than 5% by weight when the said Microcapsules B are immersed for 24 hours in acetone at 24°C.

5. An ink according to any one of the preceding claims, wherein the rate of weight reduction of the said Microcapsules B is not more than 5.0% when the said Microcapsules B were kept in a hot wind at 100°C for 24 hours.

6. An ink according to any one of the preceding claims, wherein the said Microcapsules B comprise 10 to 400 parts by weight of wall membrane material per 100 parts by weight of core material.

7. An ink according to any one of the preceding claims, wherein the wall membrane material of both the said Microcapsules A and B comprises a resin obtained by polycondensing a water-soluble cationic urea resin and a mixture of at least two prepolymers selected from melamine-formaldehyde prepolymers, urea-formaldehyde prepolymers, melamine-urea-formaldehyde prepolymers, thiourea-melamine-formaldehyde prepolymers and thiourea-melamine-urea-formaldehyde prepolymers or a mixture of a thiourea-formaldehyde prepolymer and melamine-formaldehyde prepolymer in the presence of an anionic surfactant while using an acid catalyst.

8. An ink according to any one of the preceding claims, wherein the said solvent contained in Microcapsules B is alkylnaphthalene, phenylxylylethane, alkylbiphenyl, hydrogenated terphenyl, chlorinated paraffin, mineral oil, vegetable oil, phthalic ester or a mixture of two or more thereof.

9. A process for the preparation of an ink as claimed in any one of the preceding claims, which process comprises dispersing in a dispersion medium the said Microcapsules A and B in a weight ratio of 100:1 to 90.

10. A no-carbon pressure sensitive copying paper on one face of a sheet of which are provided Microcapsules A and B as defined in any one of the preceding claims.